Europäisches Patentamt

**European Patent Office**

Office européen des brevets

(19)

(11) Publication number: **0 003 234**
**A1**

(12)                        **EUROPEAN PATENT APPLICATION**

(21) Application number: **78101784.3**

(22) Date of filing: **20.12.78**

(51) Int. Cl.²: **H 04 L 25/03**

(30) Priority: **21.12.77 IT 6986377**
**09.03.78 IT 6749878**

(43) Date of publication of application:
**08.08.79 Bulletin 79/16**

(84) Designated contracting states:
**FR GB NL**

(71) Applicant: **CSELT Centro Studi e Laboratori
Telecomunicazioni S.p.A.
Via Guglielmo Reiss Romoli, 274
I-10148 Turin(IT)**

(72) Inventor: **Tamburelli, Giovanni
Str. Val San Martino Inf. 81/5
Turin(IT)**

(74) Representative: **Lorenz, Wilhelm et al,
Hubertusstrasse 83 1/2
D-8035 Gauting(DE)**

(54) **Process and device for non-linear equalization on sequences of digital signals.**

(57) The process for equalizing digital signals according to
the invention comprises the steps of: estimating a first time a
pulse sequence or the individual pulses of the sequence,
taking into account the whole sequence, whereby pulses or
pulse sequences scarcely or not at all affected by distortions
due to postcursors are obtained; obtaining from the esti-
mated pulses or pulse sequences signals for the compensa-
tion at least of the precursors of the pulses of the sequence,
and combining said compensation signals with the pulses to
be equalized, delayed by the time necessary for the estima-
tion and the determination of the correction signals. The
invention concerns also the device for carrying out the
process.

EP 0 003 234 A1

Croydon Printing Company Ltd.

Fig. 1

Lorenz & Riederer, Postfach 1320, D-8035 Gauting 2

DipL.-Phys. Willy Lorenz
Dipl.-Ing. Anton Frhr. Riederer von Paar

CSELT
Centro Studi e Laboratori Telecomunicazioni S.p.A.
Torino, Italy

20th December, 1978
Our file: c 92-j,EP

## PROCESS AND DEVICE FOR NONLINEAR EQUALIZATION ON SEQUENCES OF DIGITAL SIGNALS

The present invention relates to digital transmission systems and is particularly concerned with a process and device for nonlinear equalization on sequences of digital signals, which can also be used for transmissions at rates faster than Nyquist's.

It is well-known that one of the greatest obstacles to the accomplishment of digital transmissions at a very high speed is given by the intersymbol interference. Due to this interference each pulse is overlapped and distorted by postcursors of preceding pulses or precursors of following pulses, so that at the receiving side the effects of said precursors and postcursors are to be compensated by the so-called equalizers.

In the case of high rate transmissions good results have been obtained for compensating the effects of postcursors and precursors by using nonlinear structures, for instance of the decision feedback type.

Yet, further investigations of the inventor have led to the consideration that still better results could be achieved by processes and devices operating on pulse sequences. This allows to realize equalizers without feedback loops.

The main object of the present invention is to provide a process for equalizing digital signals, wherein for a nonlinear compensation of the effects due both to postcursors and to precursors of the pulses to be equalized, said pulses are estimated a first time starting from a pulse sequence; from the estimated pulses or pulse sequence, signals are obtained compensating at least the effects of the precursors of the pulses of said sequence; and said compensation signals are then combined with the pulses to be equalized, delayed by the time necessary for carrying out both the evaluation and the calculation of the compensation signals, so as to correct their effect.

Another object of the present invention is the device performing the process.

The invention will be best understood by referring to the accompanying drawings in which

- Fig. 1 is a block diagram of a first embodiment of the invention;
- Figs. 2 and 3 are two variants of the embodiment of Fig. 1;
- Fig. 4 is a block diagram of a second embodiment of the invention; and
- Fig. 5 is a block diagram of a third embodiment of the invention.

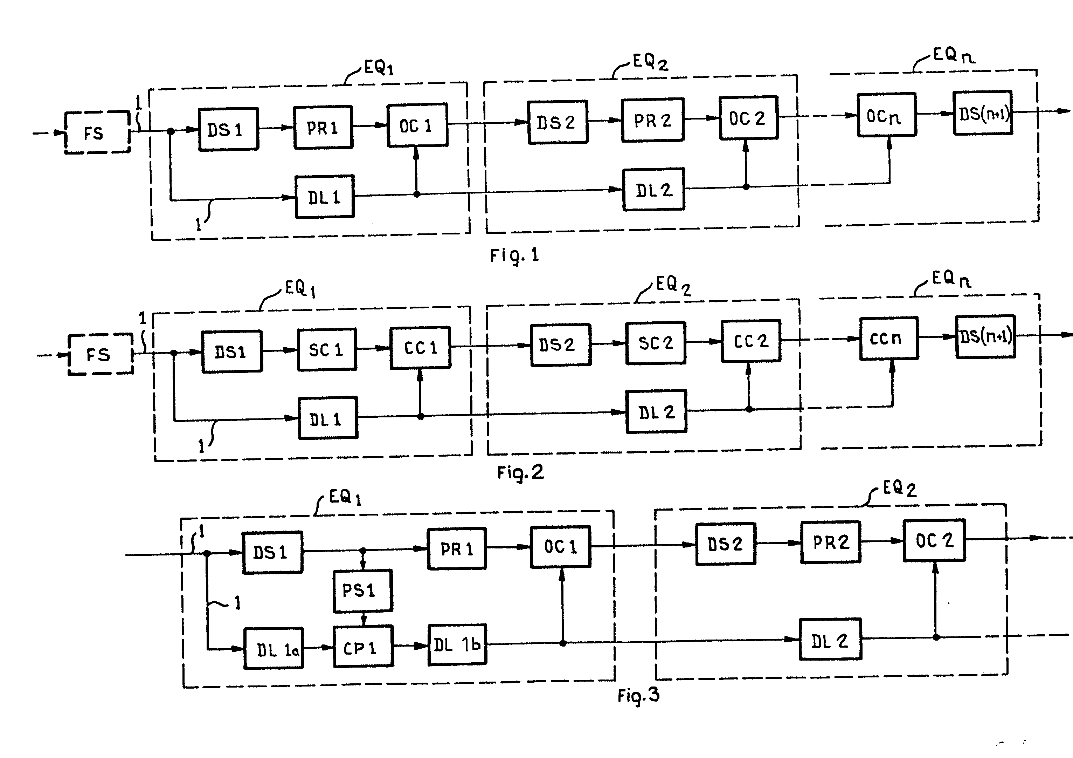

In Fig. 1, DS1 denotes a device able to carry out the evaluation of a sequence of digital signals transmitted over a line 1. More particularly, DS1 may be a Viterbi receiver, i.e. a device accomplishing an evaluation on the ground of the Viterbi algorithm, as described for instance by G.D. Forney in the paper "The Viterbi Algorithm" in Proceedings of the IEEE, Vol. 61, no. 3, March 1973.

Due to evaluation operation, a pulse sequence is obtained at the output of DS1, in which distorsions due to postcursors are compensated at least partly.

PR1 denotes a device for generating, on the ground of the pulses of the evaluated sequence, signals compensating precursor effects; in particular, PR1 may be able to determine the values of the precursors.

DL1 denotes a conventional delay line able to delay the sequence to be equalized, transmitted on line 1, by the time necessary for the evaluation operations in DS1 and for the determination of precursors in PR1.

OC1 denotes a device for correcting the precursor effects, able to combine the compensation signals delivered by PR1 with the sequence to be equalized, outgoing from DL1.

Therefore, at the output of OC1 a sequence will appear in which the effects due to precursors have been compensated at least partly.

DS1, PR1, OC1, DL1 on the whole make up a first cell, denoted by EQ1, of the equalizer according to the invention.

DS2, PR2, OC2, DL2 denote units identical to DS1, PR1, OC1, DL1, forming a second equalization cell EQ2, wherein a second sequence evaluation and a second correction of precursor effects is carried out.

Since the evaluation and determination of precursors are accomplished starting from the sequence already corrected in the first cell, the probabilities of errors of evaluation and determination of precursors are reduced with respect to the first cell: consequently, the correction accomplished in OC2 on the distorted sequence, delayed in DL1 and DL2, will be obviously more effective than the one obtained in EQ1.

Further cells identical to EQ1, EQ2, could be foreseen to improve the correction. To obtain at the equalizer output a sequence, wherein also postcursor effects are compensated, the last equalizer cell, denoted by EQn and represented only partly, may have, after the correction unit OCn, a further sequence decision device DS(n+1) which will execute the evaluation on a sequence where precursor effects have been eliminated and therefore will deliver at the output a sequence completely lacking in intersymbol interference effects.

FS denotes a possible shaping filter for "shaping" the received pulses so that the first postcursor interfering sample of each pulse is near or equal to zero, and at least the second postcursor sample is positive and has possibly a modulus greater than the one of subsequent samples. Thus the influence of postcursor samples following the first one can be reduced notably or made negligible.

An embodiment of the filter FS has been described by the inventor in the Italian patent application No. 67417 - A/77 in the name of the applicant.

A filter as FS makes less onerous the task of sequence decision devices, as these ones can operate on sequences in which the influence of postcursors is reduced. At the same time, at least in the case in which the equalization cells following FS include a Viterbi receiver, the conditions necessary for making negligible the influence of postcursor samples following the first one must not be observed so strictly as when the decision on single pulses is taken, as the Viterbi receiver gives for itself an excellent estimate of the sequence, taking postcursors into account.

In Fig. 2, in which the same symbols denote the same units of Fig. 1, filters PR and correction units OC of the different cells of the equalizer of Fig. 1 have been replaced by units denoted by SC1, SC2 ... and CC1, CC2 ... respectively. Units SC are arranged so as to obtain from the sequence evaluated in the decision devices DS signals for compensating the effects both of postcursors and precursors; units of this kind are known in the art and named channel simulators. Units CC1, CC2 ... are able to accomplish on the sequence to be equalized a combined correction of the effects both of precursors and postcursors.

The use of devices SC instead of devices PR makes easier the operation of the devices deciding the sequence in the cells follow ing the first one; furthermore, as each of said decision devices operates on sequences on which postcursors have been subjected to an additional correction, it is evident that the error probability will be reduced in a quicker manner, and therefore less cells can be utilized.

In Fig. 3 the correction of postcursor effects is performed only in the first cell and by using means different from the ones accomplishing the correction of precursor effects: in this way a sequence can reach the subsequent decision devices having the postcursor corrected once for all. Therefore the units PR1, OC1, already described with reference to Fig. 1, will be still present. In this figure the output of DS1 is also connected to a unit PS1 able to determine the values of postcursors, or in general signals compensating their effects, and a further correction unit CP1 is foreseen, similar to OC1 and arranged to perform the correction of postcursors effects in the sequence outgoing from delay line DL1a.

It can be noted that the unit OC1 corrects the sequence already purified of postcursors, which sequence is fed to OC1 through a delay line DL1b.

The second cell EQ2 is identical to the one of Fig. 1. For drawing simplicity, the filter FS and the cell EQn are not shown.

In order to simplify the structure of the equalizer the sequence deciding units DS2 ... DSn could be replaced by devices taking the decision on the individual pulses. In this case the first decision unit DS1 could also be realized by a device using a whole sequence for deciding the individual pulses.

An example of device of this second type is the so-called Ungerboeck receiver; the principle on which a receiver of this type operates, is described by Ungerboeck in the paper "Nonlinear equal

ization of binary signals in Gaussian noise", IEEE Transactions on Communication Technology, Vol. COM-19, No. 6, December 1971.

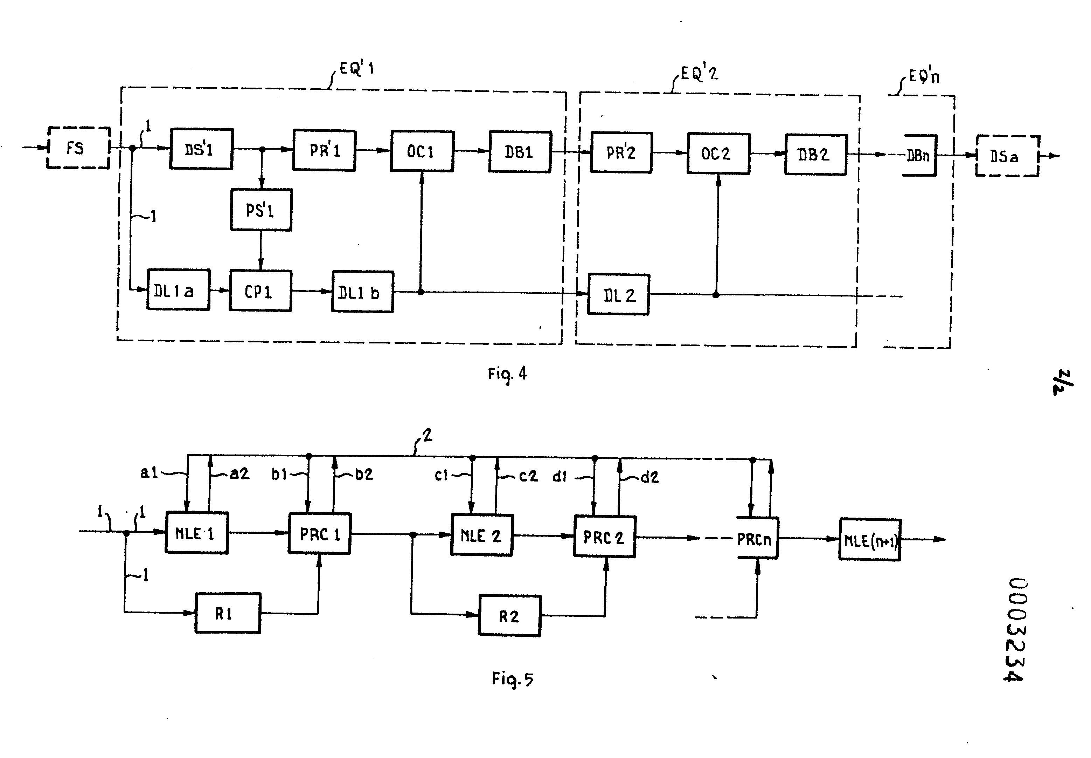

The embodiment of the invention in which only the first decision takes into account a pulse sequence is shown in Fig. 4, where FS, DL1a, DL2b, CP1, OC1 denote the same devices as in the previous Figures.

DS'1 is a decision device operating on sequences of signals arriving on line 1, and providing either a whole estimated sequence (if for instance a Viterbi receiver is used) or the estimated individual pulses of a sequence (if the Ungerboeck receiver is for instance used).

PS'1 and PR'1 are devices having functions similar to devices PS1 and PR1 in Fig. 3: in case of a decision unit providing the estimate of the individual pulses of the sequence, PS'1 and PR'1 will be arranged for operating on individual pulses.

DB1 denotes a conventional decision unit able to receive and to estimate individually the pulses outgoing from OC1.

The described blocks form a first equalization cell EQ'1.

DL2, PR'2, OC2, DB2 denote units similar to DL1b, PR'1, OC1, DB1; these form a second equalization cell EQ'2 wherein a second correction of precursor effects and a second individual decision of pulses are performed.

As the precursor determination and the estimate are performed starting from the sequence already corrected in the first cell, the erro probabilities are reduced with respect to the first cell; therefore, the correction performed in OC2 on the distorted sequence, delayed in DL1b and DL2, will be obviously more effective than that obtained in EQ'1.

Further cells, structurally like EQ'2, will be in case able to improve the correction.

The iteration of the decisions is very advantageous, since when the pulse has been exactly decided in a cell, it improves automatically the decision in the subsequent cells.

Really, it can be said that, in case of error for instance of DB1, the pulses preceding the one on which the decision has been taken would be affected with an intersymbol interference more accentuated in the part concerning the precursor, while the subsequent pulses would be affected with an intersymbol interference more accentuated in the part regarding postcursors. Consequently the decision unit DB2 would operate on more distorted signals owing to one interference or to the other or, in the worst case, to both. However, the probability that DB2 takes a correct decision can still be relatively high, in that the effects of said interferences affect the pulse coming from CP1, which differs from the one decided in a wrong manner and outgoing from DB1. Yet, in case of error also in DB2, it can happen that a subsequent decision unit, on receiving a new correction signal obtained from the unit corresponding to PR2 and thepulse purified of the postcursor, furtherly delayed by a delay line, takes a correct decision.

By increasing the number of equalization cells, the probability of compensating the errors of the preceding cell or cells will increase.

Generally speaking a pulse, decided in a wrong manner in the decision circuit DB1, can appear in the subsequent decision circuitDB2 with the precursor compensated, if also the subsequent pulse has not been decided wrongly.

Should this unfavourable hypothesis occur and should the pulse outgoing from DB2 be also wrong, this pulse can be delivered to the decision circuit of the subsequent cell, where the interfering sample of the previous signal will be compensated most probably if the further signal decided by DB1 is correct.

This new signal decided correctly will then compensate the precursor interfering sample relevant to the previous pulse, which will then be decided correctly by DB2; in the subsequent cell the compensation of the precursor of the signal considered will then occur, and so on.

In some conditions, the decision device DBn of the last cell EQ'n can be followed by a further unit DSa operating on signal sequences. DSa can be advantageously followed by a chain of decision devices such as DB1 ..., the chain possibly ending in a decision device of the same kind as DSa, and so on.

Furthermore, when the intersymbol interference is not used as an additional information on the correlation between the received signals, the first equalizer cell can be preceded by the shaping filter FS.

The device operation comes clearly out from what said before, therefore it will not be described in further detail.

What described is given only by way of example and not in a limiting sense, and variants are possible without exceeding the scope of the invention.

For instance, it is evident that the postcursor correction methods adopted for the diagrams of Figs. 2 and 3 are interchangeable. Furthermore, in case of very short sequences for which the risk that postcursors of pulses of a sequence affect the pulses of the subsequent sequence, it is possible to feed back at the input of the sequence decision device DS1, the correction signal obtained in PS1 (Fig. 3) even if this produces greater circuit complexities due to the necessity of inserting further delay lines.

Still further the circuits of Figs. 1 to 4 are easily fit for a generalization, which is very useful for increasing the performance of transmission systems via satellite.

The generalized diagram is shown in Fig. 5, wherein NLE, NLE2 ... denote nonlinear devices which can be sequence deciding devices, symbol deciding devices taking a sequence into account or decision devices for single symbols. PRC1, PRC2 ... denote devices for signal processing, each connected to the output of a decision device NLE; units PRC have the function of correction units and give at the output signals with reduced intersymbol interference; in the most complex cases devices PRC can be true processors; R1, R2 ... denote delay lines, which deliver to correction units PRC the signals to be corrected, delayed by the time required for performing the estimate operations.

Device NLE can be all identical, therefore the equalizer is of the iterative type. The correction iteration allows the error probability in the transmission system to be gradually reduced to an asymptotic value, next to the value occurring when intersymbol interference is absent.

As an alternative, the different equalizers NLE could be of a different type (iterative/mixed equalizer): by choosing the different types so that each one gives an excellent protection against a given kind of interference, the combination of a different equalizers enables the attainment of a better equalization.

It may also be useful that the different decision units NLE and the various correction units PRC exchange information to each other: the term "information exchange" denotes the possibility that the signals processed in one of the devices NLE and PRC are delivered to the devices NLE and PRC preceding them or following them inside the chain. These would employ for their operations the information (provided by the redundancy, interference a. s. o.) of pulses or pulse sequences already partly corrected: consequently, the system performance would be still improved.

0003234

The means for the information exchange are denoted in the diagram by wires al -a2; bl - b2; cl - c2; dl - d2 converging towards a common connection 2 or getting away from it.

Equalizers of this kind can be defined of the "iterative integrated" type if the units NLE are alike, and of "iterative mixed integrated" type if the units NLE differ from cell to cell.

PATENT CLAIMS


1. Process for the nonlinear equalization of digital signals wherein characterized in that, for a nonlinear compensation of the effects due to both postcursors and precursors of the pulses to be equalized, said pulses are estimated a first time, starting from a pulse sequence; in that signals for the correction of the effects at least of the precursor are obtained from the estimated pulses or from the estimated sequence; and in that said correction signals are combined with the pulses to be equalized, delayed by the time necessary for accomplishing the estimate and for the calculation of compensation signals.

2. Process according to claim 1, characterized in that the first estimate operation decides pulse sequences.

3. Process according to claims 1 and 2, characterized in that the operations for sequence estimate, for the determination of signals of precursor correction and for correction are iterated many times, starting each time from the sequence obtained as a result of the previous correction; the sequence obtained from last iteration step being once more estimated in order to obtain a pulse sequence in which both precursor and postcursor effects have been corrected.

4. Process according to claims 1 to 3, characterized in that each sequence decision is carried out in accordance with the Viterbi al-

5. Process according to claim 1, characterized in that signals for the compensation of postcursor effects are also obtained from the sequence estimated a first time and said signals combine with the sequence to be equalized to get a sequence in which both precursor and postcursor effects have been corrected at least once.

6. Process according to claim 5, characterized in that said precursor and postcursor correction signals are jointly determined, and their effects are corrected through a single correction operation.

7. Process according to claim 5, characterized in that said postcursor compensation signals are determined separately from the precursor compensation signals and are separately combined with the sequence to be equalized, the correction of precursor effects being performed on a sequence already purified of postcursors.

8. Process according to claims 6 and 7, characterized in that the determination of the signals compensating precursor and postcursor effects and the correction of such effects are iterated after each estimate operation, the last one excepted.

9. Process according to any one of claims 3 to 7, characterized in that the signals compensating postcursor effects, obtained from the first estimate operation of a first sequence, are fed back on the subsequent sequence or sequences in order to correct the influence of postcursors of the pulses of the first sequence on the subsequent sequence or sequences.

10. Process according to claim 1, characterized in that the first estimate operation decides at each pulse, by using all pulses of a sequence, according to the Ungerboeck algorithm.

11. Process according to claim 10, characterized in that from the pulses estimated the first time signals for the correction of the effects of the postcursor and precursor are obtained, and in that the corrected pulses are individually estimated a second time; new signals for the correction at least of precursor effects are obtained from the pulses estimated individually; these new correction signals are combined with the pulses to be corrected; a new estimate of the individual single pulses is accomplished, the operations of correction and estimate of single pulses being iterated starting each time from the decided pulses obtained after the preceding correction.

12. Process according to claim 11, characterized in that after the last decision on single pulses, a further decision is taken starting from sequences of the same pulses.

13. Process according to claim 11, characterized in that after the last decision on single pulses, a further decision is taken starting from sequences of the same pulses and, after this further decision on sequences, decisions and corrections on single pulses are iterated at least once, the succession of decisions and corrections on single pulses being possibly followed by a decision on sequences.

14. Process according to any preceding claim, characterized in that, before the first estimate operation, the pulses undergo a filtering operation in consequence of which said pulses are shaped so that the first interfering sample of the postcursor is equal or near to zero and the influence of samples following the first one is negligible.

15. Process according to claims 3 and 11, characterized in that the signals, resulting from each estimate and correction operation interact at least with some of the signals preceding or following them and which are to be estimated or corrected in different iteration stages.

16. Device for carrying out the process according to claims 1 to 15, characterized in that it comprises at least a first equalizing cell (EQ1; EQ'1; NLE1) including:

0003234

- a decision device (DS1, DS'1 ) able to operate taking into account sequence of pulses, and to provide pulses or pulse sequences in which at least the postcursors effects have been partly compensated;

- means (PR1, PR'1, SC1) able to obtain from the estimated pulses or pulse sequences signals for the compensation at least of the effects of precursors of the pulses of the sequences;

- a delay line (DL1; DL1a) able to delay the sequence incoming into the cell for the time required for estimating and determining compensation signals; and

- means (OC1; PRC1) for the correction of precursor effects, able to combine with said compensation signals the pulses to be equalized, delayed in said delay line (DL1, DL1a).

17. Device according to claim 16, characterized in that the decision device (DS1) of the first cell is able to evaluate pulse sequences.

18. Device according to claim 17, characterized in that it comprises a plurality of further equalizing cells identical to the first one (EQ1), and in that downstream the correction means (OCn, CCn) of the last equalization cell (EQn), a further decision device DS(n+1) is provided, able to estimate the sequence in which the precursor effect has been compensated, thus delivering at the output a sequence in which also postcursor effects have been compensated.

19. Device according to claim 18, characterized in that said decision devices (DS1, DS2 ...) are Viterbi receivers.

20. Device according to claim 9, characterized in that in each cell the means (SC1, SC2,...) determining the signals compensating the effects of the precursors are able to determine also signals compensating the effects of the postcursors, and the correction means (CC1, CC2 ...) are able to perform a joined correction of both effects.

21. Device according to claim 18, characterized in that at least the first equalization cell (EQ1) comprises, means (PS1) for deter-ming signals compensating the postcursor effects, and means (CP1) for correcting such effects in the sequence to be equalized; and in that the means (OC1, OC2 ...) correcting precursor effects are connected downstream the means for the correction of postcursor effects.

22. Device according to claim 18, characterized in that at least in said first equalization cell (EQ1) means are provided able to feed back signals compensating postcursor effects at the input of the estimate device (DS1).

23. Device according to claim 16, characterized in that the first cell (EQ'1) includes a first decision device (DS'1) able to operate on pulse sequences and a second decision device (DB1) able to operate on single pulses, the second decision device (DB1) being connected to the output of the precursor correcting means.

24. Device according to claim 23 characterized in that it comprises a plurality of further equalizing cells (EQ'2 ... EQ'n) each including a decision device (DB2 ... DBn) able to operate on single pulses and connected with the output of the respective precursor correction means (OC2...).

25. Device according to claims 23, 24, characterized in that said first decision device (DS'1) of the first cell (EQ'1) is a Viterbi receiver or a similar unit.

26. Device according to claim 23, 24, characterized in that the first decision device (DS'1) of the first cell (EQ'1) is an Ungerboeck receiver or a similar unit.

27. Device according to claims 23, 24, characterized in that the decision device for single pulses (DBn) of the last cell (EQ'n) is followed by a further decision device (DSa), able to operate on pulse sequences.

28. Device according to claim 27, characterized in that downstream said further decision device for sequences (DSa) at least a further equalization cell is provided, having decision devices able to operate on single pulses; also characterized in that downstream said decision unit of said cell or of the last one of said cells a decision device is provided operating on pulse sequences.

29. Device according to claim 28, characterized in that downstream said further decision device for sequences (DSa) a plurality of cells or of a chain of equalization cells is provided, having decision means able to operate on single pulses; also characterized in that downstream the decision device of each cell or of the last decision device of each of said chain of cells, a decision device is provided, operating on pulse sequences.

30. Device according to claims 16 to 29, characterized in that a shaping filter (FS) is placed upstream the first equalization cell (EQ1, EQ'1) able to obtain from the pulses of the sequence to be equalized, pulses in which the value of the first interfering sample of the postcursor is near or equal to zero and in which at least the second interfering sample of the postcursor is positive and in case has a modulus higher than the one of subsequent samples.

31. Device according to any preceding claim 2, characterized in that the estimate device (NLE1, NLE2 ...) and the correction device (PRC1, PRC2 ...) of each cell are connected to the estimate device (NLE) and to the correction device (PRC) of at least some of the other cells, so that each cell operates also on pulses partly equalized in the other cells.

Fig. 1

Fig. 2

Fig. 3

$^1/_2$

0003234

Fig. 4

Fig. 5

0003234

0003234

European Patent
Office

**EUROPEAN SEARCH REPORT**

Application number

EP 78 10 1784

| Category | Citation of document with indication, where appropriate, of relevant passages | Relevant to claim |
|---|---|---|
| X | CSELT RAPPORTI TECNICI, vol. 4, no. 2, June 1976, Torino (It.) G. TAMBORELLI: "Decision Feedback and Feedforward receiver (For rates faster than Nyquist's)" pages 97-105. <br><br> * Figure 2 * <br><br> -- | 1-3,5, 7,9,16, 18 |
| | CSELT RAPPORTI TECNICI, Vol. 4, no. 4, December 1976 Torino (It.) G.TAMBURELLI: "Digital Receiver with Distributed and Integrated Decision Feedback and Feedforward (to overcome the Nyquist Barrier)" pages 199-209. <br><br> * Figure 3 * <br><br> -- | 1,3,11, 15 |
| | US - A - 3 648 171 (HIRSCH) <br><br> * Column 4, line 1 - column 5, line 11 * <br><br> -- | 1,2,5, 6,11 |
| | ELECTRONICS AND COMMUNICATIONS IN JAPAN, Vol. 49, no. 10, October 1966 Tokyo T. OSATAKE and H. TANAKA: "Error-Rate Improvement through Digital Decision in pulse transmissions" pages 28-37. <br><br> * Page 29, right-hand column, lines 17-27; page 31, right-hand column, lines 10-14; pages 35, left-hand column, lines 28-33; figures 1,2 and 7 * <br><br> -- ./. | 1,2,7, 9 |

**DOCUMENTS CONSIDERED TO BE RELEVANT**

CLASSIFICATION OF THE APPLICATION (Int. Cl.²)

H 04 L 25/03

TECHNICAL FIELDS SEARCHED (Int.Cl.²)

H 04 L 25/03
H 04 B 3/14
H 04 L 27/00
H 04 J 3/10

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

European Patent Office

**EUROPEAN SEARCH REPORT**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | IEEE TRANSACTIONS ON INFORMATION THEORY, Vol. IT-18, no. 3, May 1972, New York G.D. FORNEY: "Maximum-Likelihood Sequence Estimation of Digital Sequences in the Presence of Intersymbol Interference", pages 363-378 * Figure 9 * | 1,2 | |
| P | IBM TECHNICAL DISCLOSURE BULLETIN, Vol. 20, no. 10, March 1978 New York A. DESBLACHE and J. TARRIEU: "Fast Adaptive Equalizer For Maximum-Likelihood Sequence Estimation", pages 3953-3956. * Figure * | 1,2,4, 6,17 | TECHNICAL FIELDS SEARCHED (Int. Cl.²) |
| A | IEEE TRANSACTIONS ON COMMUNICATIONS Vol. COM-22, no 5, May 1974, New York G. UNGERBOECK: "Adaptive Maximum-Likelihood Receiver For Carrier-Modulated Data Transmission Systems" * Figure 6 * | 1,10 | |
| A | US - A - 3 614 623 (McAULIFFE) * Figure 1 * | 1,9 | |
| A | US - A - 3 696 203 (LEONARD) * Figure 5 * | 1,9 | |
| PE | NL - A - 77 06938 (CSELT) * Figure 1, claims 1,3,4,5,9 * | 1-3,5, 7,9,11, 14 | |
| P | & DE - B - 2 727 874 * Figure 1, claims 1,2,5,6,11 * | | |

EPO Form 1503.2  06.78